# EUROPÄISCHE PATENTSCHRIFT

(11) **EP 0 521 012 B1**
(45) Veröffentlichungstag und Bekanntmachung des Hinweises auf die Patenterteilung: **28.09.1994**
(21) Anmeldenummer: 91905568.1
(22) Anmeldetag: 19.03.1991
(51) Int. Cl.: B64F 1/20, F21Q 3/02

(54) **MODULAR AUFGEBAUTES BELEUCHTUNGSSYSTEM, INSBESONDERE FÜR FAHR- UND ROLLBAHNEN VON FLUGHÄFEN**
MODULAR LIGHTING SYSTEM, IN PARTICULAR FOR AIRPORT RUNWAYS AND TAXIWAYS
SYSTEME D'ECLAIRAGE A STRUCTURE MODULAIRE, NOTAMMENT POUR PISTES DE ROULEMENT ET VOIES DE CIRCULATION DANS DES AEROPORTS

(30) Priorität: 20.03.1990 DE 4008932
(43) Veröffentlichungstag der Anmeldung: 07.01.1993
(73) Patentinhaber: SIEMENS AKTIENGESELLSCHAFT, 80333 München (DE)
(72) Erfinder: WILLEMS, Louis, B-1930 Zaventem (BE); URBAING, Bruno, B-1930 Zaventem (BE)
(86) Internationale Anmeldenummer: DE9100234
(87) Internationale Veröffentlichungsnummer: WO9114620

(56) Entgegenhaltungen:
- WO-A-88/05516
- GB-A- 0 759 848
- GB-A- 1 504 835
- US-A- 3 369 111
- US-A- 4 638 411

## Beschreibung

Die vorliegende Erfindung betrifft ein Beleuchtungssystem zum Einbau in einen Hohlraum in einer Fahr- oder Rollbahn, insbesondere für Flughäfen, mit welchem in eine oder mehrere Richtungen Licht in mindestens einen vorgegebenen Raumwinkelbereich mit vorgegebener Intensitätsverteilung abstrahlbar ist und welches eine etwa runde Basisplatte enthält, die als Deckel auf den Hohlraum aufsetzbar ist, wobei für jede Richtung, in der Licht abstrahlbar ist, in der Basisplatte mindestens ein Abstrahleinsatz, der eine etwa runde Grundfläche mit einem Durchmesser kleiner als der halbe Durchmesser der Basisplatte hat, angeordnet ist,

Solche Beleuchtungssysteme sind in verschiedenen Ausführungen bekannt, wobei die zu beleuchtenden Raumwinkelbereiche und die darin einzuhaltende Intensitätsverteilung im allgemeinen einer Norm unterliegen und dadurch streng vorgegeben sind. Auch die Hohlräume in einer Fahr- oder Rollbahn, die auch elektrische Installationseinrichtungen beherbergen, sind meistens in ihrem Durchmesser und ihrer Tiefe vorgegeben. Wie anhand der Zeichnung noch näher erläutert wird, gibt es mehrere verschiedene Arten von Beleuchtungseinrichtungen für Flughäfen, insbesondere Systeme die nur in einer Richtung strahlen und auch Systeme die in zwei oder mehr Richtungen strahlen. Dabei können außerdem die Farben und Intensitäten in den einzelnen Richtungen unterschiedlich sein.

Bisher wurden die verschiedenen Anforderungen durch unterschiedliche Systeme erfüllt, indem für jede Form optimierte Konstruktionen erstellt und ausgeführt wurden.

So sind insbesondere bidirektionale, d. h. in zwei Richtungen strahlende Beleuchtungskörper aus der US-PS 4,382,274, der EP-A-0 284 562, der WO 88/05516, der WO 88/00156 oder der WO 88/00157 bekannt.

Aus der GB-PS 1 504 835 ist es auch schon bekannt, für zwei unterschiedliche Abstrahlrichtungen zwei unabhängige, in eine dicke Basisplatte eingebaute Beleuchtungssysteme zu benutzen.

Diese Systeme sind allerdings teilweise von oben und teilweise von unten an der Basisplatte befestigt und können nicht als Ganzes ohne Demontage der Basisplatte ausgebaut werden.

Aus der GB-PS 759 848 ist ein komplett nach oben aus einem Hohlraum herausnehmbares Beleuchtungssystem bekannt, welches eine Lichtquelle, einen Reflektor, einen Spiegel und eine optische Linse mit einem Lichteintrittsbereich und einem Lichtaustrittsbereich aufweist. Ein Auswechseln des Beleuchtungssystems nach oben ohne Entfernung der Basisplatte ist nicht vorgesehen.

Die bisher bekannten Systeme für Flughafenbefeuerungen haben folgende Nachteile:
a) Unterschiedliche Konstruktionen für unterschiedliche Beleuchtungsanforderungen sind produktionstechnisch unrationell und erschweren die Logistik bezüglich der Ersatzteile. b) Schäden betreffen im allgemeinen gleich das ganze System und nicht nur Einzelteile davon. c) Bei der Wartung der Systeme müssen im allgemeinen die den Hohlraum abdeckenden und das Beleuchtungssystem tragenden Basisplatten von dem Hohlraum abgeschraubt werden, was zeitaufwendig ist und bei einer Beschädigung der im Boden fest installierten Gewinde zu großen Schwierigkeiten führen kann. d) Die Flexibilität der bekannten Konstruktionen ist begrenzt, insbesondere im Hinblick auf die einstellbaren Winkel zwischen einzelnen auszuleuchtenden Richtungen, z. B. bei gekrümmten Fahrbahnen.

Aufgabe der vorliegenden Erfindung ist die Schaffung eines Beleuchtungssystems mit modularen Einsätzen, welches die genannten Nachteile des Standes der Technik vermeidet. Die modularen Einsätze sollen möglichst kompakt, d. h. mit möglichst kleinen Abmessungen, gebaut sein, ohne daß sie jedoch Nachteile bezüglich der Lichtintensität und/oder im Hinblick auf den auszuleuchtenden Raumwinkelbereich aufweisen. Durch die Verwendung modularer Einsätze soll gleichzeitig der Service vereinfacht und dadurch kostengünstiger werden.

Die Aufgabe wird gemäß Anspruch 1 dadurch gelöst, daß ein Abstrahleinsatz vorgesehen ist, der als ein ein eigenes Gehäuse aufweisender, modularer, einzeln nach oben aus der Basisplatte herausnehmbarer Einsatz zur Lichterzeugung und Abstrahlung ausgebildet ist.

Ein entscheidender Schritt der vorliegenden Erfindung liegt in der Schaffung eines modularen Einsatzes mit einem Durchmesser, der kleiner als der halbe Durchmesser der Basisplatte ist. Erst durch diese extrem kompakte Bauform lassen sich zwei oder mehr unabhängige Einsätze in einer Basisplatte unterbringen, wodurch die Voraussetzung geschaffen wird, verschiedene Anforderungen durch unterschiedliche Anordnungen von Modulen zu erfüllen.

Für die Wartung ist es besonders günstig, daß jeder modulare Einsatz einzeln nach oben aus der Basisplatte herausnehmbar ist, wodurch das zeitaufwendige Abnehmen der gesamten Basisplatte vermieden werden kann. Dieser Vorteil kann noch dadurch gesteigert werden, daß die modularen Einsätze mit zwei oder mehreren Schnellverschlüssen in der Basisplatte befestigt werden, insbesondere z. B. mit gefederten 1/4-Drehungs-Verschlüssen, die auch bei häufiger Betätigung keinen Schaden nehmen und für definierte Befestigungskräfte sorgen.

Je nach den Platzverhältnissen lassen sich mit den modularen Einsätzen Beleuchtungssysteme mit ein bis vier gleichartigen Modulen aufbauen. Unter gleichartig ist hier zu verstehen, daß die Module gleich aufgebaut sind, sich jedoch in Intensitätsverteilung, ausgeleuchtetem Raumwinkel und/oder der Farbe unterscheiden können. Der Hauptanwendungsbereich liegt bei Beleuchtungssystemen mit zwei oder drei gleichartigen modularen Einsätzen, die Licht in mindestens zwei Richtungen abstrahlen.

Für die vorliegende Erfindung ganz entscheidend ist die Gestaltung des modularen Einsatzes selbst. Dabei ist zu bedenken, daß sich bei einer Verkleinerung der bekannten Systeme ganz erhebliche Kühlprobleme ergeben, was bisher wohl auch der Grund war, weshalb kompakte für einen modularen Aufbau geeignete Systeme nicht in Betracht gezogen wurden.

Hier wird gemäß Anspruch 5 Abhilfe geschaffen durch einen erfindungsgemäßen modularen Einsatz in einer Modul-Basisplatte, wobei zumindest Teilbereiche seiner Rückseite und der Reflektorschaft, der die Lichtquelle trägt, frei nach außen in den Hohlraum ragen. Gerade diese Anordnung des Reflektors statt, wie bisher bekannt, im Inneren des Gehäuses, hilft ganz erheblich bei der Wärmeabfuhr aus dem Inneren des Gehäuses und ermöglicht somit eine Verkleinerung des Systems. Da die Wärme in der Lichtquelle entsteht, werden der Reflektor und der Reflektorschaft besonders heiß, so daß es sehr günstig ist, wenn diese Bauteile frei nach außen in den Hohlraum ragen und nicht das Innere des Gehäuses aufheizen. Wie anhand der Zeichnung noch näher erläutert wird, ist diese Einbauweise nicht mit Nachteilen bezüglich der mechanischen Stabilität und Empfindlichkeit des Systems verbunden, da das Gehäuse außen so gestaltet werden kann, daß Reflektor und Reflektorschaft genügend geschützt sind. Zusätzlich ermöglicht die neue Anordnung ein schnelles Auswechseln von Reflektor und Lichtquelle, wobei die elektrischen Anschlüsse leicht zugänglich sind.

Besonders günstig kann es sein, den Reflektor aus für Infrarot- Strahlung durchlässigem Glas herzustellen, auf welches eine selektiv reflektierende Schicht aufgebracht ist, die Infrarot- Strahlung nicht reflektiert. Durch eine solche Anordnung gelangt das für die Aufheizung des Systems hauptsächlich verantwortliche infrarote Licht direkt nach außen in den Hohlraum, wodurch der größte Teil der störenden Wärme direkt abgeführt wird. Eine solche Anordnung würde bei einem im Inneren eines Gehäuses angeordneten Reflektor nicht annähernd den gleichen Kühleffekt erzielen.

Erfindungsgemäß wurde, um die Anforderungen an die Kompaktheit des Systems einhalten zu können, ein Lichtweg unter Einschaltung eines etwa ebenen passiven optischen Elementes gewählt. Dieses Element, welches im allgemeinen ein Spiegel oder ein Farbspiegel sein kann, ist vorzugsweise in einer Tasche des Gehäuses angeordnet, die zur Oberseite offen ist. Diese Tasche wird durch einen an das Gehäuse angeformten Halterahmen gebildet, so daß das passive optische Element ohne zusätzlichen Montageaufwand leicht einsetzbar ist. Ein solches optisches Element, insbesondere z. B. ein Farbspiegel, absorbiert immer einen mehr oder weniger großen Anteil des auftreffenden Lichtes und wird dadurch erheblich aufgeheizt. Dies trifft auch für andere optische Elemente, wie z.B. holographische Linsen, die zur Beeinflussung der Intensitätsverteilung eingesetzt werden können, zu. Deshalb ist es günstig, wenn die Rückseite des optischen Elementes an der Gehäusewand anliegt, um über diese die absorbierte Wärmeenergie abführen zu können. Zur Unterstützung dieses Effektes kann das Gehäuse außen mit Kühlrippen versehen sein, insbesondere hinter dem passiven optischen Element und z.B. oberhalb des Reflektors. Dabei sollte das Gehäuse aus einem gut wärmeleitenden Material bestehen, z. B. aus einer Metallegierung, die durch Druckguß in die komplizierte Form des Gehäuses gebracht werden kann.

Für die Kompaktheit des Systems ist es besonders günstig, wenn der Reflektor ein etwa parallele Lichtstrahlen erzeugender paraboloider Reflektor mit kleiner Fokuslänge ist, d. h. mit einem Abstand zwischen Scheitelpunkt des Paraboloids und Brennpunkt von weniger als 10 mm, vorzugsweise zwischen 3 und 6 mm. Aus Platzgründen kann der Reflektor an seiner Ober- und Unterseite abgeschnitten sein, so daß er in eine längliche Öffnung im Gehäuse einsetzbar ist. Dadurch wird die Bauhöhe des Reflektors verringert, ohne daß dies erhebliche Nachteile bezüglich der Lichtintensität mit sich bringt. Durch diese Bauweise wird auch der geometrischen Ausdehnung der Lichtquelle Rechnung getragen. Da die Positionierung der Lichtquelle im Brennpunkt des Reflektors mit großer Präzision erfolgen muß, empfiehlt es sich, Reflektor und Lichtquelle als Einheit vorzufertigen, so daß diese nur gemeinsam austauschbar sind. Der Abstand zwischen dem Reflektor und dem passiven optischen Element ist wegen der nahezu parallelen Lichtstrahlen, die der Reflektor erzeugt, weniger kritisch, so daß Toleranzen im Gehäuse und beim Einbau des Reflektors unkritisch sind.

Je nach den Anforderungen an die zu erzeugende Lichtintensität kann es trotz des kompakten Aufbaus des modularen Einsatzes gelingen, die Temperatur im Inneren soweit zu reduzieren, daß für die optische Linse statt Glas ein Kunststoff, insbesondere Polycarbonat, eingesetzt werden kann. Für diese Anwendungsfälle ist es wegen der geringeren Empfindlichkeit von Kunststofflinsen möglich, auf eine zusätzliche Schutzkappe über der Linse zu verzichten, wodurch die sich über das Niveau der Fahr- oder Rollbahn erhebende Bauhöhe des Systems deutlich verkleinert werden kann, wie anhand der Zeichnung näher erläutert wird.

Insgesamt können Gehäuse und Linse des modularen Einsatzes mittels eines Deckelringes zu einer dichten, kompakten Einheit von ca. 125 mm Durchmesser und ca. 100 mm Höhe zusammengesetzt werden, wobei diese Maße nur als Beispiel für die Größenordnung und die Kompaktheit des Systems zu verstehen sind.

Zur Kompaktheit des Systems trägt auch bei, daß der Reflektor unter einem Winkel von 25 bis 35°, vorzugsweise etwa 30°, zur Normalen des passiven optischen Elementes gerichtet ist.

Ausführungsbeispiele der Erfindung sind in der Zeichnung dargestellt, wobei die Erfindung jedoch nicht auf diese Ausführungsbeispiele beschränkt ist. Es zeigen:
Figur 1 einen Schnitt durch einen in eine Basisplatte eingebauten modularen Einsatz, wobei der Schnitt senkrecht durch die Mitte des modularen Einsatzes gelegt ist, und zwar parallel zur Hauptlichtabstrahlungsrichtung;
Figur 2 einen gleichen Schnitt durch ein anderes Ausführungsbeispiel der Erfindung mit einer Kunststofflinse ohne Schutzkappe;
Figuren 3, 4, 5, 6 und 7 unterschiedliche Anordnungsbeispiele für den Einbau modularer Einsätze in Basisplatten.

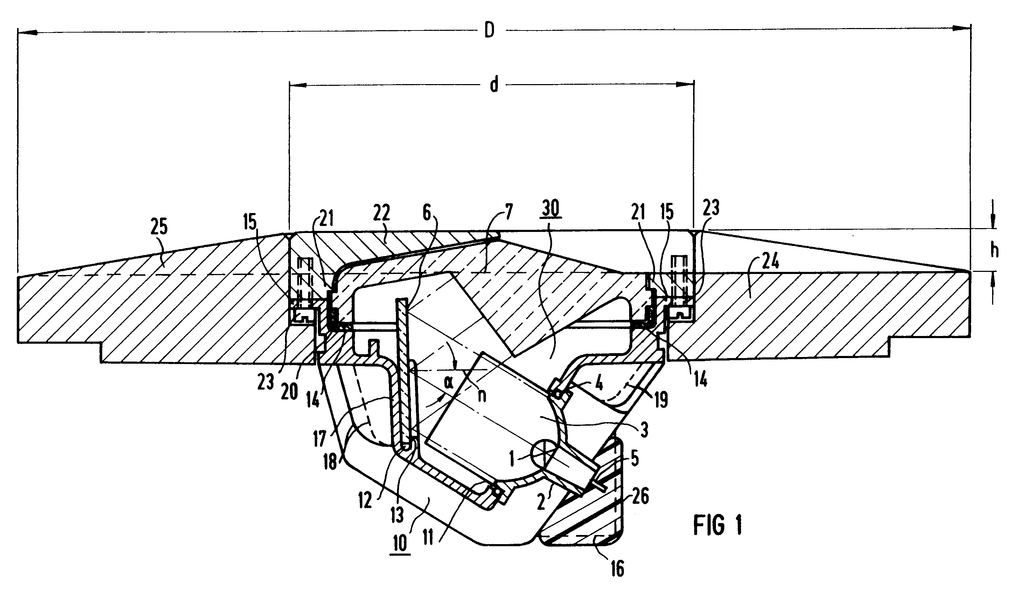

Figur 1 zeigt im Schnitt einen erfindungsgemäßen modularen Einsatz 30, welcher in eine Basisplatte 24 eingebaut ist. Eine Lichtquelle 1 ist in dem Schaft 2 eines Reflektors 3 gehaltert, vorzugsweise mit diesem als Baueinheit verbunden. Reflektor 3, Reflektorschaft 2 und die elektrischen Anschlüsse 5 der Lichtquelle 1 ragen frei schräg nach unten in den nicht weiter dargestellten Hohlraum unter der Basisplatte 24. Mittels eines Dichtringes 4 und nicht weiter dargestellten üblichen Befestigungsmechanismen ist der Reflektor 3 in einer länglichen, etwa ovalen Öffnung 11 des Gehäuses 10 befestigt. Das Gehäuse selbst ist in seinem oberen Bereich zylindrisch, verjüngt sich aber in seinem unteren Bereich, soweit dies die Anordnung der einzelnen Elemente zuläßt, wobei auf der Seite des Reflektors 3 und der gegenüberliegenden Seite deutliche Abweichungen von der Form eines Rotationskörpers entstehen. Der modulare Einsatz 30 enthält weiterhin ein etwa ebenes passives optisches Element 6, im vorliegenden Fall ein Spiegel oder Farbspiegel, und eine für solche Systeme an sich bekannte optische Linse 7 mit einer Lichteintrittsfläche 8 und einer Lichtaustrittsfläche 9. Der Teilbereich der Linse 7, der zwischen der Lichteintrittsfläche 8 und der Lichtaustrittsfläche 9 liegt und für die optischen Eigenschaften verantwortlich ist, kann eine prismatische Form oder andere an sich bekannte Ausgestaltungen aufweisen, welche für die Brechung des Lichtes und dessen Intensitätsverteilung verantwortlich sind. Die Ausgestaltung der Linse 7 in dieser Hinsicht ist nicht Gegenstand der vorliegenden Erfindung. Das Gehäuse 10 bildet im Inneren eine Tasche 12 für den Spiegel 6, wobei die Tasche 12 durch einen an das Gehäuse 10 angeformten Halterahmen 13 gebildet wird, welcher nach oben offen ist, wodurch ein leichtes Einsetzen des Spiegels 6 ohne zusätzliche Halterungen möglich ist. Im Bereich eines Teils der Rückseite des Spiegels 6 bildet das Gehäuse 10 eine Abstützung 17 für den Spiegel 6, welche gleichzeitig in engem Wärmekontakt mit dem Spiegel 6 steht. Kühlrippen 18 hinter der Abstützung 17 verbessern die Wärmeabfuhr der in dem Spiegel 6 absorbierten Wärme nach außen. In seinem oberen Bereich bildet das Gehäuse 10 eine flache, ringförmige Linsenauflage 14, auf der die Linse 7 mit einem zwischengelegten Dichtungsring 20 aufliegt. Weiter außen bildet das Gehäuse 10 einen Kragen 15, welcher nach unten die Auflage auf der Basisplatte 24 bildet und nach oben die Auflage für einen Deckelring 21 bildet. Der Deckelring 21 überkragt die Linse 7, so daß durch eine Verschraubung 23 der vollständige modulare Einsatz 30 geschlossen wird. Die Ausgestaltung der Oberseite von Basisplatte 24, Linse 7 und Deckelring 21 entspricht den im Stand der Technik bekannten Konstruktionsprinzipien. Im allgemeinen ragt die Lichtaustrittsfläche 9 der Linse 7 schräg über die Oberfläche der Fahr- oder Rollbahn hinaus. Da schwere Fahrzeuge möglichst ungestört über das Beleuchtungssystem rollen sollen, besitzt die Basisplatte 24 rundum eine Rampe 25 bis zur maximalen Höhe des ganzen Systems, aus der lediglich im Lichtaustrittsbereich ein entsprechender Ausschnitt ausgespart ist. Zum Schutz von empfindlichen Glaslinsen kann der Deckelring 21 eine Schutzkappe 22 aufweisen, welche sich an die Rampe 25 anschließt und die für die Lichtaustrittsfläche 9 nicht benötigte Oberfläche der Linse 7 überragt. Die Höhe h der Rampe 25 entspricht somit der maximalen Höhe, die Linse 7 und Schutzkappe 22 über das Niveau der Fahr- oder Rollbahn hinausragen. Der Durchmesser d des modularen Einsatzes 30 ist kleiner als die Hälfte des Durchmessers D der Basisplatte 24, wodurch zwei oder mehr Module in einer Basisplatte angeordnet werden können. Es sei noch erwähnt, daß die äußere Gestalt des Gehäuses 10 durch Kühlrippen 18, 19 und die mechanische Festigkeit verstärkende Stege gekennzeichnet ist. Wichtig ist nur, daß keine Bauteile die in der Basisplatte 24 für den modularen Einsatz 30 vorgesehene Öffnung überragen. Insbesondere können zum Schutz der Außenseite des Reflektors 3 und des Reflektorschaftes 2 mit den elektrischen Anschlüssen 5 seitlich am Gehäuse überstehende Lappen 16 angeordnet sein, welche selbst bei einer rauhen Behandlung des Systems Beschädigungen am Reflektor 3 verhindern. Über die beidseitig angeordneten Lappen 16 kann beispielsweise auch zum Schutz der elektrischen Anschlüsse 5 vor Feuchtigkeit und anderen Einflüssen ein elastischer, prismatischer Aufsatz, beispielsweise aus Silicon, aufgeschoben werden, welcher gegen die hohen dort auftretenden Temperaturen beständig ist. Auf diese Weise lassen sich die hohen thermischen und elektrischen Anforderungen auch bei dem rauhen Einsatz, beispielsweise auf Flughäfen, unter dem Einfluß von Feuchtigkeit und Streusalz erfüllen.

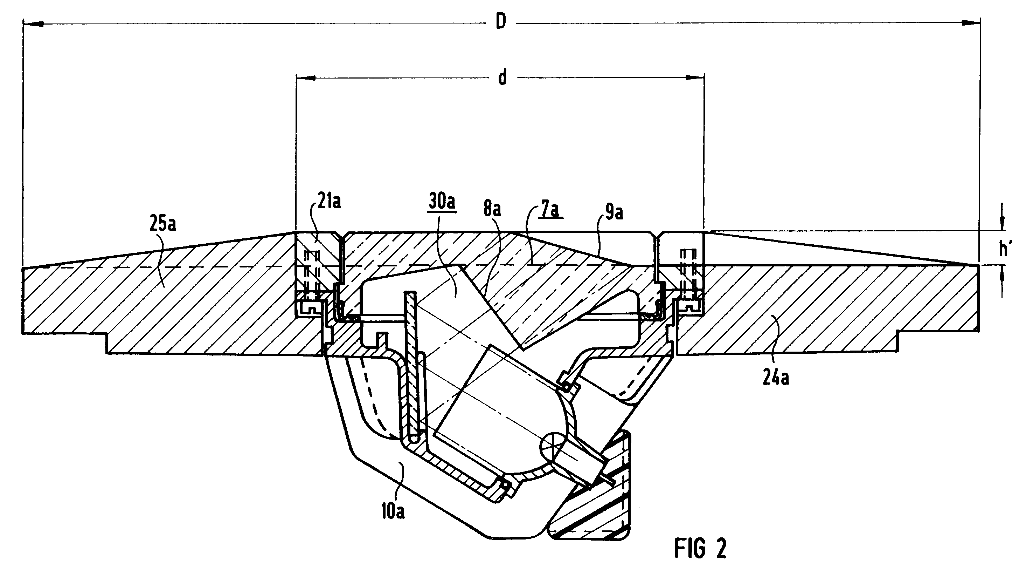

Figur 2 zeigt ein anderes Ausführungsbeispiel der Erfindung, wobei der untere Teil des modularen Einsatzes 30a genau dem in Figur 1 entspricht. Anders ist jedoch die Gestaltung der Linse 7a. In Fällen, in denen die Temperatur im modularen Einsatz 30a genügend niedrig gehalten werden kann, kann die Linse 7a aus einem Kunststoff, vorzugsweise Polycarbonat, bestehen, welcher wesentlich weniger empfindlich gegen äußere Beschädigungen ist als Glas. Aus diesem Grunde wird es bei im Prinzip unveränderter Anordnung von Lichteintrittsfläche 8a und Lichtaustrittsfläche 9a (bis auf Veränderungen, die den anderen Brechungsindex des Materials berücksichtigen) möglich, auf die Schutzkappe 22 in Figur 1 ganz zu verzichten. Die Linse 7a kann in diesem Bereich geringfügig dicker ausgeführt werden, wodurch ihre Eigenstabilität für den vorgesehenen Anwendungsbereich ausreicht. Der Deckelring 21a kann dadurch flacher und ohne Schutzkappe ausgeführt werden, wodurch gleichzeitig die Rampe 25a der Basisplatte 24a flacher verlaufen kann. Insgesamt ergibt sich bei diesem Ausführungsbeispiel eine geringere Höhe h' über dem Niveau der Fahr- oder Rollbahn, was besonders vorteilhaft ist.

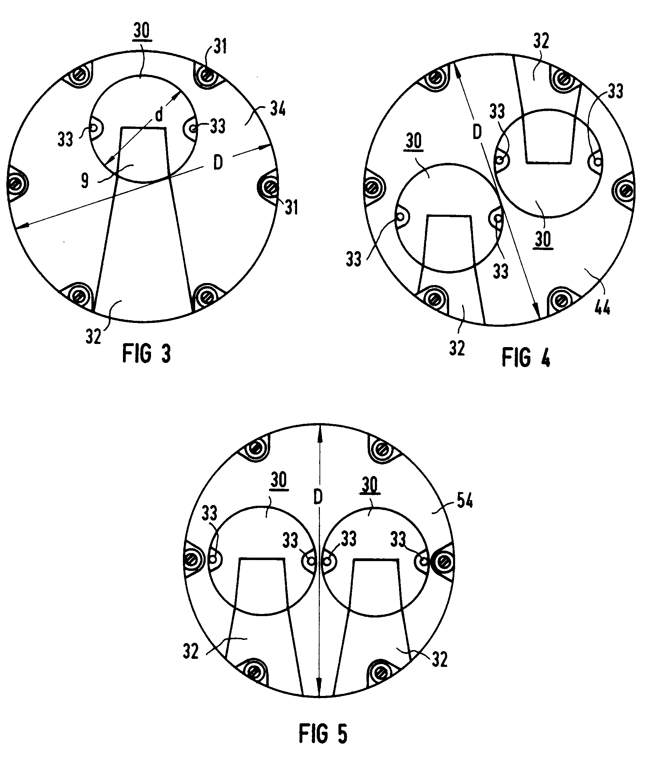

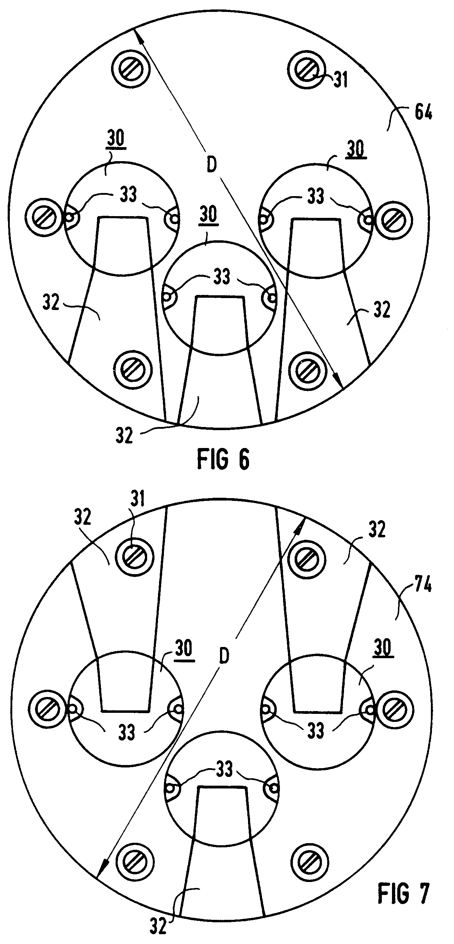

In den Figuren 3, 4, 5, 6 und 7 werden in Ansichten von oben beispielhaft verschiedene Anordnungsmöglichkeiten von modularen Einsätzen 30 in Basisplatten 34, 44, 54, 64 bzw. 74 gezeigt. Zunächst ist es möglich (Figur 3) nur einen einzigen modularen Einsatz 30 in einer Basisplatte 34 anzuordnen. Dabei gibt es wegen des kleinen Durchmessers d des modularen Einsatzes 30 neben einer konzentrischen Anordnung auch die hier dargestellte Möglichkeit, den modularen Einsatz 30 exzentrisch in der Basisplatte 34 anzuordnen. Auf diese Weise ist es möglich, die Steilheit der Rampen in der Basisplatte in fast jeder gewünschten Weise zu beeinflussen, wobei im vorliegenden Fall die Rampe auf der Lichtabstrahlungsseite flacher verläuft als auf der gegenüberliegenden Seite. Angedeutet sind in den Figuren 3, 4, 5, 6 und 7 auch jeweils die Schraubbefestigungen 31, mit denen die Basisplatten verankert sind. Diese brauchen bei Verwendung der modularen Einsätze 30 für die Wartung des Systems nicht mehr gelöst zu werden. Es genügt, die ebenfalls angedeuteten Schnellverschlüsse 33 zu lösen, um das ganze System zugänglich zu machen. Im übrigen genügen die Basisplatten 34, 44, 54, 64, 74 mit der Ausformung ihrer Lichtaustrittsbereiche 32 den im allgemeinen genormten und bekannten Anforderungen.

Figur 4 zeigt die mögliche Anordnung von zwei modularen Einsätzen 30 in einer Basisplatte 44 zur Abstrahlung von Licht in zwei Richtungen. Verschiedene Konstellationen der Module 30 sind hier möglich, wodurch unterschiedliche Anforderungen an die Eigenschaften beim Überrollen des Systems erfüllbar sind.

Wie Figur 5 zeigt, können auch zwei modulare Einsätze 30 nebeneinander in einer Ebene senkrecht zur Abstrahlungsrichtung angeordnet werden und in die gleiche Richtung strahlen.

Wenn die modularen Einsätze noch kleiner oder die Basisplatten 64 bzw. 74 genügend groß sind, können auch problemlos drei oder vier modulare Einsätze in einer Basisplatte angeordnet werden. Hierdurch lassen sich viele verschiedene Anforderungen an Richtungen, Lichtintensität und/oder Lichtverteilung erfüllen.

Insgesamt bietet der modulare Aufbau von Beleuchtungssystemen für Fahr- oder Rollbahnen sowohl technische wie wirtschaftliche Vorteile, da das System durch seine Flexibilität viele unterschiedliche technische Anforderungen erfüllen kann, wobei gleichzeitig die Wartung und Ersatzteillagerung vereinfacht wird.

## Patentansprüche

1. Beleuchtungssystem zum Einbau in einen Hohlraum in einer Fahr- oder Rollbahn, insbesondere für Flughäfen, mit welchem in eine oder mehrere Richtungen Licht in mindestens einen vorgegebenen Raumwinkelbereich mit vorgegebener Intensitätsverteilung abstrahlbar ist und welches eine etwa runde Basisplatte enthält, die als Deckel auf den Hohlraum aufsetzbar ist, wobei für jede Richtung, in der Licht abstrahlbar ist, in der Basisplatte mindestens ein Abstrahleinsatz, der eine etwa runde Grundfläche mit einem Durchmesser (d) kleiner als der halbe Durchmesser (D) der Basisplatte hat, angeordnet ist,
**dadurch gekennzeichnet**,
daß der Abstrahleinsatz als ein ein eigenes Gehäuse (10) aufweisender, modularer, einzeln nach oben aus der Basisplatte (24; 24a; 34; 44; 54; 64; 74) herausnehmbarer Einsatz (30) zur Lichterzeugung und Abstrahlung ausgebildet ist.

2. Beleuchtungssystem nach Anspruch 1, **dadurch gekennzeichnet**, daß jeder modulare Einsatz (30) mit zwei oder mehreren Schnellverschlüssen (33) in der Basisplatte befestigbar ist, insbesondere mit gefederten 1/4-Drehungs-Verschlüssen.

3. Beleuchtungssystem nach Anspruch 1 oder 2, **dadurch gekennzeichnet**, daß jede Basisplatte ein bis vier gleichartige modulare Einsätze (30) enthält.

4. Beleuchtungssystem nach Anspruch 1 oder 2, **dadurch gekennzeichnet**, daß es zwei oder mehr gleichartige modulare Einsätze (30) enthält, von denen Licht in mindestens zwei Richtungen abstrahlbar ist.

5. Leuchteinheit zum Einbau von oben in einen Hohlraum in einer Fahr- oder Rollbahn, enthaltend ein Gehäuse, eine Lichtquelle, einen Reflektor mit einem Reflektorschaft, der die Lichtquelle trägt, ein etwa ebenes passives optisches Element, sowie eine optische Linse mit einem Lichteintrittsbereich und einem Lichtaustrittsbereich, **dadurch gekennzeichnet**,
daß die Leuchteinheit aus einer Basisplatte (24; 24a; 34; 44; 54; 64; 74) zum Abdecken des Hohlraumes und zumindest einem, ein eigenes Gehäuse (10) aufweisenden Leuchteinsatz (30) besteht und wobei zumindest Teilbereiche des Reflektors und der Reflektorschaft jedes Leuchteinsatzes frei nach außen in den Hohlraum ragen.

6. Leuchteinheit nach Anspruch 5, **dadurch gekennzeichnet**, daß der Reflektor (2) aus für Infrarot-Strahlung durchlässigem Glas besteht, auf welches eine selektiv reflektierende Schicht aufgebracht ist, welche Infrarot-Strahlung nicht reflektiert.

7. Leuchteinheit nach Anspruch 5 oder 6, **dadurch gekennzeichnet**, daß das Gehäuse (10) innen einen Halterahmen (13) aufweist, der eine Tasche (12) zur Aufnahme des passiven optischen Elementes (6) bildet, die zur Oberseite offen ist.

8. Leuchteinheit nach Anspruch 5, **dadurch gekennzeichnet**, daß das etwa ebene passive optische Element (6) einen Spiegel oder ein selektiv einzelne Farben, z. B. rot oder grün, reflektierendes Element enthält.

9. Leuchteinheit nach Anspruch 5 oder 8, **dadurch gekennzeichnet**, daß das etwa ebene passive optische Element (6) eine holographische Linse enthält.

10. Leuchteinheit nach Anspruch 5 oder 6, **dadurch gekennzeichnet**, daß das Gehäuse (10) außen Kühlrippen (18, 19) aufweist, insbesondere in den Bereichen hinter dem passiven optischen Element (6) und/oder oberhalb des Reflektors (3).

11. Leuchteinheit nach einem der Ansprüche 5 bis 10, **dadurch gekennzeichnet**, daß der Reflektor (3) ein etwa parallele Lichtstrahlen erzeugender etwa paraboloider Reflektor ist mit einem Abstand zwischen Scheitelpunkt und Brennpunkt von weniger als 10 mm, vorzugsweise zwischen 3 und 6 mm.

12. Leuchteinheit nach Anspruch 11, **dadurch gekennzeichnet**, daß der Reflektor (3) an seiner Ober- und Unterseite abgeschnitten ist, so daß er in eine längliche Öffnung (11) im Gehäuse (10) einsetzbar ist.

13. Leuchteinheit nach Anspruch 11 oder 12, **dadurch gekennzeichnet**, daß Lichtquelle (1) und Reflektor (3) eine vorgefertigte Einheit bilden und nur gemeinsam austauschbar sind.

14. Leuchteinheit nach einem der Ansprüche 5, 6 oder 10, **dadurch gekennzeichnet**, daß die optische Linse (7; 7a) aus Kunststoff, insbesondere Polycarbonat, besteht und für das Überrollen von schweren Fahrzeugen ausreichende Eigenstabilität aufweist.

15. Leuchteinheit nach einem der Ansprüche 5 bis 14, **dadurch gekennzeichnet**, daß Gehäuse (10) und Linse (7; 7a) mittels eines Deckelringes (21; 21a) zu einer dichten, kompakten Einheit von beispielsweise ca. 125 mm Durchmesser und ca. 100 mm Höhe zusammengesetzt sind, vorzugsweise mittels Schraubverbindungen (23).

16. Leuchteinheit nach einem der Ansprüche 5 bis 15, **dadurch gekennzeichnet**, daß der Reflektor (3) unter einem Winkel (alpha) zur Normalen (n) von etwa 25° bis 35°, vorzugsweise etwa 30°, auf das passive optische Element (6) gerichtet ist.

## Claims

1. A lighting system for installation in a hollow chamber in a runway or taxiway, in particular for airports, with which light can be emitted in one or more directions in at least one predetermined solid angle range with predetermined intensity distribution and which comprises an approximately round base plate which can be placed as a cover onto the hollow chamber, wherein for each direction in which light can be emitted in the base plate there is provided at least one emission insert which has an approximately round base surface with a diameter (d) smaller than half the diameter (D) of the base plate, characterised in that the emission insert is constructed as a modular insert (30) for the generation and emission of light which possesses its own housing (10) and can be individually removed upwardly from the base plate (24; 24a; 34; 44; 54; 64; 74).

2. A lighting system as claimed in Claim 1, characterised in that each modular insert (30) can be secured in the base plate with two or more fast-action closures (33), in particular with spring-mounted 1/4-turn closures.

3. A lighting system as claimed in Claim 1 or 2, characterised in that each base plate contains one to four identical modular inserts (30).

4. A lighting system as claimed in Claim 1 or 2, characterised in that it comprises two or more identical modular inserts (30) from which light can be emitted in at least two directions.

5. A lighting unit for installation from above into a hollow chamber in a runway or taxiway, comprising a housing, a light source, a reflector with a reflector shaft which bears the light source, an approximately planar, passive optical element, and an optical lens with a light entry region and a light exit region, characterised in that the lighting unit consists of a base plate (24; 24a; 34; 44; 54; 64; 74) for covering the hollow chamber and at least one lighting insert (30) provided with its own housing (10) and where at least partial regions of the reflector and the reflector shaft of each lighting insert project freely outwards into the hollow chamber.

6. A lighting unit as claimed in Claim 5, characterised in that the reflector (2) consists of glass which is permeable to infrared radiation and to which is applied a selectively reflective coating which does not reflect infrared radiation.

7. A lighting unit as claimed in Claim 5 or 6, characterised in that the housing (10) is provided internally with a holding frame (13) which forms a pocket (12) which accommodates the passive optical element (6) and which is open at the top.

8. A lighting unit as claimed in Claim 5, characterised in that the approximately planar, passive optical element (6) contains a mirror or an element which selectively reflects individual colours, for example red or green.

9. A lighting unit as claimed in Claim 5 or 8, characterised in that the approximately planar, passive optical element (6) contains a holographic lens.

10. A lighting unit as claimed in Claim 5 or 6, characterised in that the housing (10) is provided externally with cooling fins (18, 19), in particular in the regions behind the passive optical element (6) and/or above the reflector (3).

11. A lighting unit as claimed in one of Claims 5 to 10, characterised in that the reflector (3) is an approximately paraboloid reflector which generates approximately parallel light rays with a distance between the apex and the focal point of less than 10 mm, preferably between 3 and 6 mm.

12. A lighting unit as claimed in Claim 11, characterised in that the reflector (3) is cut off at its top and bottom so that it can be inserted into an elongated opening (11) in the housing (10).

13. A lighting unit as claimed in Claim 11 or 12, characterised in that light source (1) and reflector (3) form a prefabricated unit and are replaceable only together.

14. A lighting unit as claimed in one of Claims 5, 6 or 10, characterised in that the optical lens (7; 7a) consists of plastic, in particular polycarbonate, and possesses an intrinsic stability adequate to withstand the travel of heavy vehicles over said lens.

15. A lighting unit as claimed in one of Claims 5 to 14, characterised in that housing (10) and lens (7; 7a) are assembled via a lid ring (21; 21a), preferably by means of screw connections (23), to form a tight, compact unit for example with a diameter of approximately 125 mm and a height of approximately 100 mm.

16. A lighting unit as claimed in one of Claims 5 to 15, characterised in that the reflector (3) is directed towards the passive optical element (6) at an angle (alpha) to the normal (n) of approximately 25° to 35°, preferably approximately 30°.

## Revendications

1. Système d'éclairage, destiné à être monté dans une cavité d'une piste de roulement ou d'une voie de circulation, notamment pour des aéroports, par lequel de la lumière peut être émise dans une ou plusieurs directions, dans au moins une zone d'angle solide donnée à l'avance et avec une distribution d'intensité donnée à l'avance et qui comporte une plaque de base à peu prés circulaire, qui peut être posée en tant que couvercle sur la cavité, et dans lequel pour chaque direction dans laquelle de la lumière peut être émise, il est prévu dans la plaque de base au moins une pièce rapportée d'émission, qui a une surface de base à peu prés circulaire d'un diamètre (d) inférieur à la moitié du diamètre (D) de la plaque de base, caractérisé par le fait que la pièce rappotée d'émission est agencé sous la forme d'un module (30) rapporté, qui possède son propre boîtier (10), qui peut être retiré individuellement vers le haut à partir de la plaque de base (24; 24a; 34; 44; 54; 64; 74) et qui sert à produire et à émettre de la lumière.

2. Dispositif d'éclairage suivant la revendication 1, caractérisé par le fait que chaque module (30) rapporté peut être fixé à la plaque de base par deux ou par plusieurs systèmes de fermeture rapide (33), notamment par des systèmes de fermeture quart-de-tour sur ressort.

3. Dispositif d'éclairage suivant la revendication 1 ou 2, caractérisé par le fait que chaque plaque de base comporte de un à quatre modules (30) rapportées identiques.

4. Dispositif d'éclairage suivant la revendication 1 ou 2, caractérisé par le fait qu'il comporte deux ou plusieurs modules (30) rapportés identiques, qui peuvent émettre de la lumière dans au moins deux directions.

5. Unité d'éclairage destinée à être montée par le haut dans une cavité d'une piste de roulement ou d'une voie de circulation, comportant, contenu dans un boîtier, une source lumineuse, un réflecteur pourvu d'une tige qui porte la source lumineuse, un élément optique passif à peu près plat, ainsi qu'une lentille optique comportant une zone d'entrée de la lumière et une zone de sortie de la lumière, caractérisée par le fait que l'unité d'éclairage est constituée d'une plaque de base (24; 24a; 34; 44; 54; 64; 74) servant à recouvrir la cavité, et d'au moins une pièce rapportée (30) d'éclairage qui a son propre boîtier (10), au moins des zones partielles du réflecteur et de la tige du réflecteur de chaque pièce rapportée d'éclairage faisant saillie librement vers l'extérieur dans la cavité.

6. Unité d'éclairage selon la revendication 3, caractérisée en ce que le réflecteur (2) est en verre transparent au rayonnement infrarouge, sur lequel est déposée une couche de réflexion sélective, qui ne réfléchit pas le rayonnement infrarouge.

7. Unité d'éclairage selon la revendication 5 ou 6, caractérisée par le fait que le boîtier (10) comporte intérieurement un cadre de support (13), qui forme un logement (12) qui sert à recevoir l'élément optique passif (6) et qui est ouvert du côté supérieur.

8. Unité d'éclairage selon la revendication 5, caractérisée par le fait que l'élément optique à peu prés plat (6) comporte un miroir ou un élément qui réfléchit de façon sélective diverses couleurs, par exemple le rouge ou le vert.

9. Unité d'éclairage selon la revendication 5 ou 8, caractérisée par le fait que l'élément optique passif à peu près plat (6) comporte une lentille holographique.

10. Unité d'éclairage selon la revendication 5 ou 6, caractérisée par le fait que le boîtier (10) comporte extérieurement des ailettes de refroidissement (18,19), notamment dans les zones situées en arrière de l'élément optique passif (6) et/ou au-dessus du réflecteur (3).

11. Unité d'éclairage selon l'une des revendications 5 à 10, caractérisée par le fait que le réflecteur (3) est un réflecteur de forme à peu près parabolique, qui produit des rayons lumineux sensiblement parallèles, la distance entre le sommet et le foyer du réflecteur étant inférieure à 10 mm et comprise de préférence entre 3 et 6 mm.

12. Unité d'éclairage selon la revendication 11, caractérisée par le fait que le réflecteur (3) est tronqué sur son côté supérieur et sur son côté inférieur de sorte qu'il peut être inséré dans une ouverture (11) oblongue ménagée dans le boîtier (10).

13. Unité d'éclairage selon la revendication 11 ou 12, caractérisée par le fait que la source de lumière (1) et le réflecteur (3) forment une unité préfabriquée et ne peuvent être remplacés qu'ensemble.

14. Unité d'éclairage selon l'une des revendications 5, 6 ou 10, caractérisée par le fait que la lentille optique (7; 7a) est en matière plastique, notamment en polycarbonate, et a une stabilité propre suffisante pour que des véhicules lourds puissent rouler sur cette lentille.

15. Unité d'éclairage selon l'une des revendications 5 à 14, caractérisée par le fait que le boîtier (10) et la lentille (7;7a) sont réunis au moyen d'une bague de couvercle (21;21a) en une unité peu encombrante et étanche, ayant possédant par exemple un diamètre d'environ 125 mm et une hauteur d'environ 100 mm, de préférence au moyen de liaisons à vis (23).

16. Unité d'éclairage selon l'une des revendications 5 à 15, caractérisée par le fait que le réflecteur (3) fait un angle (alpha), compris entre environ 25° et 35° et égal de préférence à environ 30°, par rapport à la normale (n) de l'élément optique passif (6).
